# EUROPEAN PATENT APPLICATION

(11) **EP 4 407 846 A1**
(43) Date of publication of application: **31.07.2024**
(21) Application number: 23787467.2
(22) Date of filing: 17.03.2023
(51) Int. Cl.: H02K 9/00, H02K 9/19, H02K 9/193

(54) **SPRAY RING, STATOR ASSEMBLY, MOTOR AND ELECTRIC VEHICLE**

(30) Priority: 12.04.2022 CN 202220837742 U
(71) Applicant: Contemporary Amperex Intelligence Technology (Shanghai) Limited, Shanghai 200120 (CN)
(72) Inventor: LIU, Yuanlin, Shanghai 200120 (CN); LI, Yang, Shanghai 200120 (CN); ZHAO, Yonggang, Shanghai 200120 (CN); HUANG, Xingfu, Shanghai 200120 (CN)
(74) Representative: Rowlands, Stuart Michael
(86) International application number: PCT/CN2023/082035
(87) International publication number: WO 2023/197819

(57) **Abstract**

The present application relates to a spray ring, a stator, a stator assembly, a motor, and an electric vehicle. The spray ring (10) includes an annular disc (1) and an annular cylinder (2) coaxially arranged with the annular disc (1). The annular cylinder (2) has an end connected to a first end of the annular disc (1) in an axial direction of the spray ring (10), and a connection between the annular cylinder (2) and the annular disc (1) occurs at an outer end of the annular disc (1) in a radial direction of the spray ring (10). A region for accommodating a member to be cooled is formed between the annular cylinder (2) and the first end of the annular disc (1). The annular disc (1) has a first hole (123) for spraying of cooling liquid towards the member to be cooled in a first direction; and a side wall of the annular cylinder (2) has a second hole (21) for spraying of cooling liquid towards the member to be cooled in a second direction. The first direction is different from the second direction.

## Description

### CROSS-REFERENCE TO RELATED APPLICATIONS

The present application claims priority to Chinese Patent Application No. 202220837742.X, filed on April 12, 2022. The entire content of the above-referenced application is incorporated herein by reference.

### FIELD

The present disclosure relates to the field of motor technology, and more particularly, to a spray ring, a stator assembly, a motor, and an electric vehicle.

### BACKGROUND

Since lithium-ion and other batteries have the advantages of high energy density, high power density, high number of cycles, long storage time, etc., lithium-ion and other batteries have been commonly used in electric vehicles.

Driving or other functions of an electric vehicle can be driven by a motor, which is powered by a battery. However, it is currently found that the motor has poor performance during operation.

### SUMMARY

The purpose of the present disclosure is to improve the working performance of the motor.

A first aspect of the present disclosure provides a spray ring, including an annular disc and an annular cylinder coaxially arranged with the annular disc. The annular cylinder has an end connected to a first end of the annular disc in an axial direction of the spray ring, and a connection between the annular cylinder and the annular disc occurs at an outer end of the annular disc in a radial direction of the spray ring. A region for accommodating a member to be cooled is formed between the annular cylinder and the first end of the annular disc. The annular disc has a first hole for spraying of cooling liquid towards the member to be cooled in a first direction. A side wall of the annular cylinder has a second hole for spraying of cooling liquid towards the member to be cooled in a second direction. The first direction is different from the second direction.

The spray ring of this embodiment includes the annular disc and the annular cylinder. The cooling liquid can be sprayed from different directions towards the member to be cooled at the same time through the first hole on the annular disc and the second hole on the annular cylinder, so that the member to be cooled has a larger area in contact with the cooling liquid. The member to be cooled can be cooled more quickly and evenly. More heat can be taken away, and a cooling effect can be improved. Moreover, the annular disc is located at a radial inner side of the annular cylinder, which allows the annular disc to be located on a side of the member to be cooled in the axial direction after mounting. The annular disc has a first hole, which provides a structural basis for cooling from a side end of the member to be cooled in the axial direction.

In some embodiments, an inner wall of the annular disc has a plurality of grooves arranged at intervals in a circumferential direction. The grooves run through in a thickness direction of the annular disc to form a first tooth between each two adjacent grooves. The first tooth has a first cavity for storing cooling liquid. The first cavity has an opening located on an outer wall of the annular disc, and a first wall of at least part of the first tooth close to the annular cylinder has the first hole.

In this embodiment, with a plurality of first teeth at a radial inner end of the annular disc in the circumferential direction, the cooling liquid can be sprayed from different circumferential positions on one side of the member to be cooled in the axial direction, and a more uniform cooling of the member to be cooled can be achieved. Moreover, the first cavity in each of the first teeth, which is equivalent to forming a plurality of cooling flow channels, allowing the cooling liquid to be distributed to flow to different positions in the circumferential direction. No additional flow channels are required, and the structure is compact.

In some embodiments, the first direction is parallel to or at an acute angle to the axial direction of the spray ring. The second direction is parallel to or at an acute angle to the radial direction of the spray ring.

This embodiment can select the suitable first direction and second direction according to actual needs so as to cool the member to be cooled from different directions at the same time. For example, the cooling may be carried out by spraying the cooling liquid from the axial direction and the radial direction at the same time, so that the member to be cooled has a larger area in contact with the cooling liquid. This allows the member to be cooled is cooled more quickly and evenly, and the cooling effect can be improved.

In some embodiments, the spray ring further includes a first mounting portion. A radial inner end of the first mounting portion is connected to a second end of the annular cylinder in an axial direction and extends in an entire circumferential direction. A radial outer end of the first mounting portion is configured to be connected to a housing.

In this embodiment, with a first mounting portion at the second end of the annular cylinder, not only the spray ring can be easily mounted in the housing, but also a radial outer region of the annular cylinder can form a cavity for collecting the cooling liquid. As a result, the cooling liquid can be sprayed out continuously and stably through the first hole and the second hole, better cooling effect can be achieved, and the input amount of the cooling liquid can be saved.

In some embodiments, the radial outer end of the first mounting portion is provided with a sealing member. The sealing member is configured to form a sealing connection between the radial outer end of the first mounting portion and the housing.

In this embodiment, with a seal member between the radial outer end of the first mounting portion and the housing, the radial outer region of the annular cylinder can form a cavity for collecting the cooling liquid by a blocking of the first mounting portion and the sealing effect of the sealing member. As a result, the cooling liquid can be sprayed out continuously and stably through the first hole and the second hole, better cooling effect can be achieved, and the input amount of the cooling liquid can be further saved.

In some embodiments, the first mounting portion includes a plate-shaped portion and a protrusion portion. A radial inner end of the plate-shaped portion is connected to the second end of the annular cylinder in the axial direction. A protrusion portion is connected to a radial outer end of the plate-shaped portion and protrudes in the axial direction towards at least one side relative to the plate-shaped portion. A radial outer side of the protrusion portion has an accommodation groove for placing the sealing member.

The first mounting portion of this embodiment can design the main portion as a thinner plate-shaped structure to reduce the weight of the spray ring, and provide a protrusion portion with an increased cross-sectional area at the radial outer end of the plate-shaped portion to allow the radial outer end of the first mounting portion to have a sufficient area to mount the sealing member.

In some embodiments, the spray ring further includes a second mounting portion. A radial inner end of the second mounting portion is connected to the radial outer end of the annular disc and extends in the entire circumferential direction. The second mounting portion is located at a side of the annular disc facing away from the annular cylinder in the axial direction. A radial outer end of the second mounting portion is configured to be connected to the housing.

In this embodiment, with a second mounting portion, not only can the spray ring be easily mounted in the housing, but also a radial outer region of the annular cylinder can form a cavity for collecting the cooling liquid through a blocking of the second mounting portion. As a result, the cooling liquid can be sprayed out continuously and stably through the first hole and the second hole, better cooling effect can be achieved, and the input amount of the cooling liquid can be saved.

In some embodiments, the second mounting portion is flush with and forms a flat plane with an outer end surface of the annular disc facing away from the annular cylinder in an axial direction.

In this embodiment, the arrangement of the second mounting portion can avoid affecting the flow of the cooling liquid into the first cavity without increasing an axial dimension of the spray ring. Moreover, the second mounting portion is flush with the outer end surface of the annular disc, which makes it easy to allow a plane formed by the second mounting portion and the outer end surface of the annular disc abuts against other members to achieve axial limitation and allows the mounting of the spray ring more stable.

In some embodiments, the spray ring further includes a first mounting portion and a second mounting portion. A radial inner end of the first mounting portion is connected to a second end of the annular cylinder in an axial direction and extends in an entire circumferential direction. A radial inner end of the second mounting portion is connected to a radial outer end of the annular disc and extends in the entire circumferential direction. The second mounting portion is located on a side of the annular disc facing away from the annular cylinder in the axial direction. The radial outer ends of the first mounting portion and the second mounting portion are configured to be connected to the housing. The first mounting portion, the annular cylinder, and the second mounting portion define a second cavity in communication with all of the first cavities.

This embodiment forms a second cavity by arranging the first mounting portion and the second mounting portion. In this way, the cooling liquid can be collected in the radial outer region of the annular cylinder and be supplied to each of the first cavities by flowing in the circumferential direction. As a result, the cooling liquid can be sprayed out through the first hole and the second hole evenly and stably, and the cooling effect of the member to be cooled can be improved.

In some embodiments, in the radial direction, the radial outer end of the second mounting portion is higher than the radial outer end of the first mounting portion.

In this embodiment, the radial outer end of the second mounting portion is higher than the radial outer end of the first mounting portion. When mounted in the housing, an axial limitation of the spray ring in the housing can be achieved by a higher portion of the second mounting portion abutting against a step structure of the inner wall of the housing.

In some embodiments, a first wall of the first tooth has a plurality of first holes arranged at intervals in the radial direction.

In this embodiment, with a plurality of first holes arranged at intervals on the first wall of the first teeth in the radial direction, a spraying range of the cooling liquid in the radial direction can be increased on the basis of the cooling liquid being sprayed out through the plurality of first teeth in the circumferential direction. As a result, a contact area between the cooling liquid and the member to be cooled can be increased and uniformity of the cooling liquid sprayed onto the member to be cooled can be improved, which can take away more heat and optimize the cooling effect.

In some embodiments, a side wall of the annular cylinder has a plurality of second holes. The plurality of second holes is arranged in at least one row in the axial direction, and each row of the at least row includes multiple ones of the plurality of second holes arranged at intervals in the circumferential direction of the spray ring.

In this embodiment, each row of second holes includes a plurality of second holes arranged at intervals in the circumferential direction, which can spray the cooling liquid to the member to be cooled from different angles in the circumferential direction; or when multiple rows of second holes are provided in the axial direction, a spraying range of the cooling liquid in the axial direction can be increased to increase a contact area between the cooling liquid and the member to be cooled and to improve the uniformity of the cooling liquid sprayed onto the member to be cooled, which can take away more heat and optimize the cooling effect.

A stator assembly is provided according to a second aspect of the present disclosure. The stator assembly includes a stator core, a winding, and the spray ring according to above-mentioned embodiments. The winding is arranged at the stator core and includes an end winding section located at an end of the stator core in the axial direction. A gap is formed between the end winding section and the stator core, and the end winding section is the member to be cooled. The annular disc is located in a gap between the stator core and the end winding section in the axial direction. A side wall of the annular disc having the first hole is located on a side facing away from the stator core.

In some embodiments, an inner wall of the annular disc has a plurality of grooves arranged at intervals in a circumferential direction. The plurality of grooves runs through in a thickness direction of the annular disc to form a first tooth between each two adjacent grooves. The stator core is annular. A plurality of second teeth is arranged at a radial inner wall of the stator core and is arranged at intervals in a circumferential direction. The plurality of second teeth has a one-to-one correspondence with a plurality of first teeth in the circumferential direction. One of the plurality of first teeth and one of the plurality of second teeth that are located at a same circumferential position are wound correspondingly.

In this embodiment, with a plurality of first teeth arranged at intervals on the annular disc in the circumferential direction, and the plurality of first teeth having a one-to-one correspondence with the plurality of second teeth, not only can the demand for spraying the cooling liquid at different circumferential positions in the first direction be satisfied, but also the winding of the stator core is more convenient. As a result, the function of spraying the cooling liquid in the first direction does not affect the original winding formation method in the stator assembly.

In some embodiments, a first end of the annular disc in the axial direction abuts against the end winding section, and a second end of the annular disc in the axial direction abuts against an end surface of the stator core.

The structure of this embodiment enables the two ends of the annular disc in the axial direction to abut against the end surfaces of the end winding section and the stator core respectively. The annular disc can be axially limited through the gap space between the end winding section and the stator core, which can simplify the fixed mounting structure of the spray ring.

A motor is provided according to a third aspect of the present disclosure. The motor includes a housing, a rotor, and the stator assembly according to above-mentioned embodiments. The rotor is rotatably mounted to the housing, and the stator assembly is provided in the housing and coaxially provided around the rotor.

In the motor of this embodiment, the cooling liquid can be sprayed on the end winding section in the stator assembly through the spray ring in different first and second directions to improve the cooling effect of the end winding section. During the long-term operation of the motor, more heat can be taken away. Therefore, the motor can be kept working in a suitable temperature range, and the working performance, reliability, and life of the motor can be improved.

In some embodiments, the spray ring further includes a first mounting portion and a second mounting portion. The first mounting portion has a radial inner end connected to a second end of the annular cylinder in an axial direction and extends in an entire circumferential direction. The second mounting portion has a radial inner end connected to a radial outer end of the annular disc and extends in the entire circumferential direction. The second mounting portion is located on a side of the annular disc facing away from the annular cylinder in the axial direction. The housing includes an accommodation shell and an end cover. The accommodation shell sequentially has a third hole and a fourth hole in the axial direction, and one end of the third hole facing away from the fourth hole forms an opening of the accommodation shell. A diameter of the third hole is greater than that of the fourth hole to form a step at a connection. The end cover is configured to close the opening. The end winding section is formed at both ends of the stator core in the axial direction. The spray ring provided between the end winding section away from the end cover and the stator core is the first spray ring, and the spray ring provided between the end winding section close to the end cover and the stator core is a second spray ring. The first mounting portion of the first spray ring fits with and is connected to the inner wall of the fourth hole. The second mounting portion of the first spray ring abuts against the step. The first mounting portion of the second spray ring fits with and is connected to the inner wall of the third hole and abuts against an end surface of the end cover. The second mounting portion of the second spray ring abuts against the inner wall of the third hole.

In this embodiment, end winding sections are respectively provided on both sides of the stator core. By providing the first spray ring A and the second spray ring B, the two end winding sections can be cooled respectively to optimize the cooling effect of the motor. Moreover, by providing steps on the inner wall of the accommodation shell and designing the housing into a split structure, it is possible to not only achieve the smooth mounting of the two spray rings, but also axially limit the two spray rings.

In some embodiments, the spray ring further includes a first mounting portion. A radial inner end of the first mounting portion is connected to the second end of the annular cylinder in the axial direction and extends in the entire circumferential direction, and the first mounting portion is sealingly connected to the housing.

In this embodiment, by allowing the first mounting portion to be sealingly connected to the housing, the first mounting portion, the second mounting portion, the annular cylinder, and the housing can define a second cavity, which facilitates the collection of the cooling liquid and prevents the cooling liquid from flowing out through the gap between the first mounting portion and the housing.

An electric vehicle is provided according to a fourth aspect of the present disclosure. The electric vehicle includes the motor according to above-mentioned embodiments.

### BRIEF DESCRIPTION OF THE DRAWINGS

In order to clearly illustrate technical solutions of embodiments of the present disclosure, a brief description of drawings used in embodiments of the present disclosure is given below. It is apparent that the drawings in the following descriptions are only part embodiments of the present disclosure, and for those skilled in the art, other drawings can be obtained according to these drawings without creative labor.
FIG. 1 is a schematic diagram of an appearance of an electric vehicle according to some embodiments of the present disclosure;
FIG. 2 is a cross-sectional view of a motor according to some embodiments of the present disclosure;
FIG. 3 is a cross-sectional view of a rotor according to some embodiments of the present disclosure;
FIG. 4 is a structural schematic diagram of a stator assembly according to some embodiments of the present disclosure;
FIG. 5 and FIG. 6 are respectively a front view and an AA cross-sectional view of a stator core according to some embodiments;
FIG. 7, FIG. 8, and FIG. 9 are respectively structural schematic views of a spray ring in a first view, a second view, and a third view according to some embodiments;
FIG. 10 is a partial cross-sectional view of a spray ring;
FIG. 11 is a front view of a spray ring according to some embodiments;
FIG. 12 is a BB cross-sectional view of the spray ring shown in FIG. 11.

### Explanation of reference numerals:

10, spray ring; 10A, first spray ring; 10B, second spray ring; 1, annular disc; 11, groove; 12, first tooth; 121, first cavity; 122, first wall; 123, first hole; 124, second wall; 2, annular cylinder; 21, second hole; 3, first mounting portion; 31, plate-shaped portion; 32, protrusion portion; 321, accommodation groove; 4, second mounting portion; 5, sealing member; 6 second cavity;
100, stator assembly; 20, stator core; 201, second tooth; 30, winding; 301, winding main section; 302, end winding section; 40, rotor; 41, first axial section; 42, second axial section; 43, third axial section; 50, bearing; 60, housing; 61, accommodation shell; 611, third hole; 612, fourth hole; 613, step; 614, liquid injection hole; 62, end cover;
200, motor;
300, electric vehicle.

### DETAILED DESCRIPTION

The embodiments of the present disclosure will be described in further detail below with reference to the accompanying drawings and examples. The detailed description of the following embodiments and the accompanying drawings are used to exemplarily illustrate the principles of the present disclosure, but cannot be used to limit the scope of the present disclosure, that is, the present disclosure is not limited to the described embodiments.

In the description of the embodiments of the present disclosure, the term "a plurality of" refers to more than two (including two). Similarly, "a plurality of groups" refers to more than two groups (including two groups), and "a plurality of pieces" refers to more than two pieces (including two pieces).

In the description of the present disclosure, it should be understood that the orientation or position relationship indicated by the terms "upper", "lower", "top", "bottom", "front", "back", "inner" and "outer" is only for the convenience of describing the present disclosure, rather than indicating or implying that the pointed device must have a specific orientation, or be constructed and operated in a specific orientation, and therefore cannot be understood as a limitation of the present disclosure.

In addition, the terms "first," "second," "third," etc., are used for descriptive purposes only and are not to be construed as indicating or implying relative importance. "Vertical" is not vertical in the strict sense, but within the allowable error range. "Parallel" is not parallel in the strict sense, but within the allowable error range. The words of orientation appearing in the following description are the directions shown in the drawings and do not limit the specific structure of the present disclosure.

In the description of the present disclosure, it should also be noted that, unless otherwise clearly specified and limited, terms such as "install", "connect", "connect to", and the like should be understood in a broad sense. For example, it may be a fixed connection or a detachable connection or connection as one piece, direct connection or indirect connection through an intermediate. For those of ordinary skill in the art, the specific meaning of the above-mentioned terms in the present disclosure can be understood according to specific circumstances.

Reference herein to "an embodiment" means that a particular feature, structure, or characteristic described in connection with the embodiment can be included in at least some embodiments of the present disclosure. The appearances of this phrase in various places in the specification are not necessarily all referring to the same embodiment, nor are separate or alternative embodiments mutually exclusive of other embodiments. Those skilled in the art understand, both explicitly and implicitly, that the embodiments described herein may be combined with other embodiments.

The inventor has found in practice that the current working performance of the motor is poor, mainly due to the fact that when the motor is working for a long period of time or is subjected to a large load, there will be a large temperature rise. After the temperature rises, the various performance indexes will drop significantly, and working at a high temperature for a long period of time will also lead to a significant shortening of the life of the motor. The operating heat of the motor is mainly generated by the coil windings in the stator assembly.

Therefore, the inventor realized that in order to improve the working performance of the motor, the temperature rise during the operation of the motor needs to be controlled within a suitable range, and thus better cooling for the coil windings inside the motor needs to be provided. Based on this, the inventor thought of providing an oil spray ring in the motor to spray cooling oil to the outer periphery of the end winding through the oil spray ring. However, it was found in the test that such a method can reduce the temperature of the motor during operation, but the amount of heat taken away is limited, and thus fails to achieve a better cooling effect.

By analysis, the main reason for the poor cooling effect of such an oil spray ring is that the oil spray ring can only spray oil to the outer periphery of the end winding, and cannot spray oil from the side of the end winding in the axial direction. In this way, the contact area between the cooling oil and the end winding is less. Therefore, in order to further improve the cooling effect, it is necessary to increase the contact area of the cooling oil and the end winding. Based on this idea, the present disclosure improves the spray ring.

The spray ring of the present disclosure may be used to cool the stator assembly in a motor, and such a motor may be used in an electric vehicle.

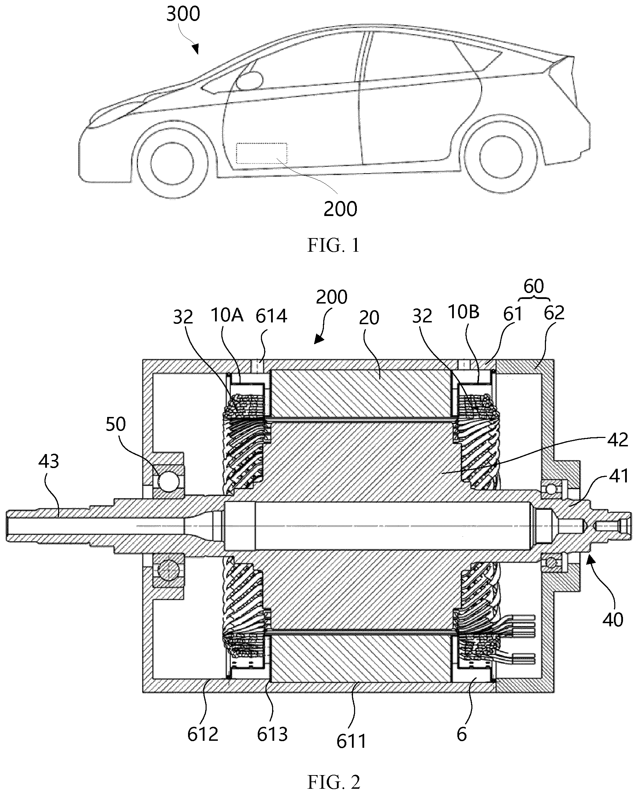

FIG. 1 is a schematic diagram of an electric vehicle 300 according to some embodiments. The electric vehicle 300 may be a pure electric vehicle, a hybrid vehicle, or a range-extended vehicle, etc. Specifically, the electric vehicle 300 is provided with a motor 200, which is used to drive the vehicle to move or drive other components to work. The motor 200 may be provided with the electrical energy required for working through the battery provided in the electric vehicle 300. The mounting position of the motor 200 may be determined according to the actual needs, and FIG. 1 is only for illustration.

In some embodiments, as shown in FIG. 2, the motor 200 includes a housing 60, a rotor 40, and a stator assembly 100. The rotor 40 is rotatably mounted to the housing 60, and the stator assembly 100 is provided in the housing 60 and coaxially provided around the rotor 40.

For example, the housing 60 may be cylindrical or other shapes. The rotor 40 may be rotatably supported in the housing 60 by means of a bearing 50, and an end of the rotor 40 may extend out of the housing 60 to be connected with a driven mechanism such as an axle. The stator assembly 100 is disposed in the housing, and its outer diameter may be adapted to an inner diameter of the housing 60.

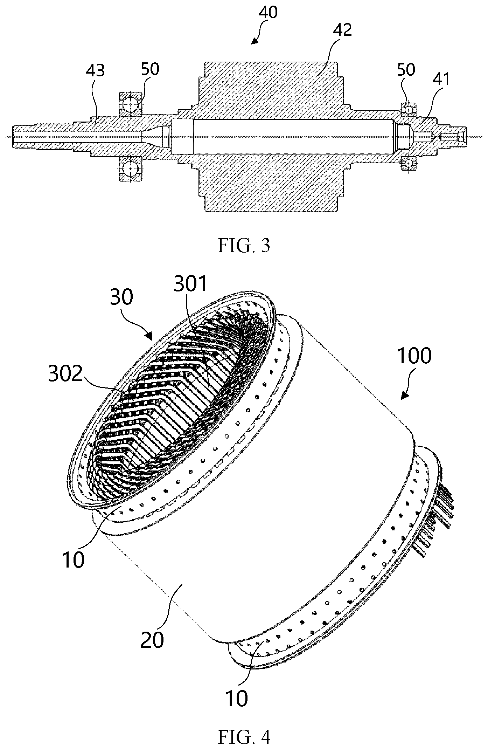

As shown in FIG. 3, the rotor 40 may sequentially include a first axial section 41, a second axial section 42, and a third axial section 43 in the axial direction. The second axial section 42 is connected between the first axial section 41 and the third axial section 43, and bearings 50 are mounted at the first axial section 41 and the third axial section 43 to support the rotor 40 at two ends of the housing 60 in the axial direction. The diameter of the second axial section 42 is larger than that of the first axial section 41 and the third axial section 43 to form an air gap with a bore of the stator assembly 100. The air gap is provided to allow the rotor 40 to rotate flexibly in the bore of the stator assembly 100 and to meet the performance requirements of the motor 200.

In some embodiments, as shown in FIG. 4, the stator assembly 100 includes a stator core 20, a winding 30, and a spray ring 10. The winding 30 is provided in the stator core 20, and the winding 30 includes an end winding section 302 located at an end of the stator core 20 in the axial direction. A gap is formed between the end winding section 302 and the stator core 20, and the end winding section 302 is the member to be cooled. At least part of the spray ring 10 is located in the gap between the stator core 20 and the end winding section 302 in the axial direction. The spray ring 10 is used to spray the cooling liquid onto the end winding section 302 for cooling.

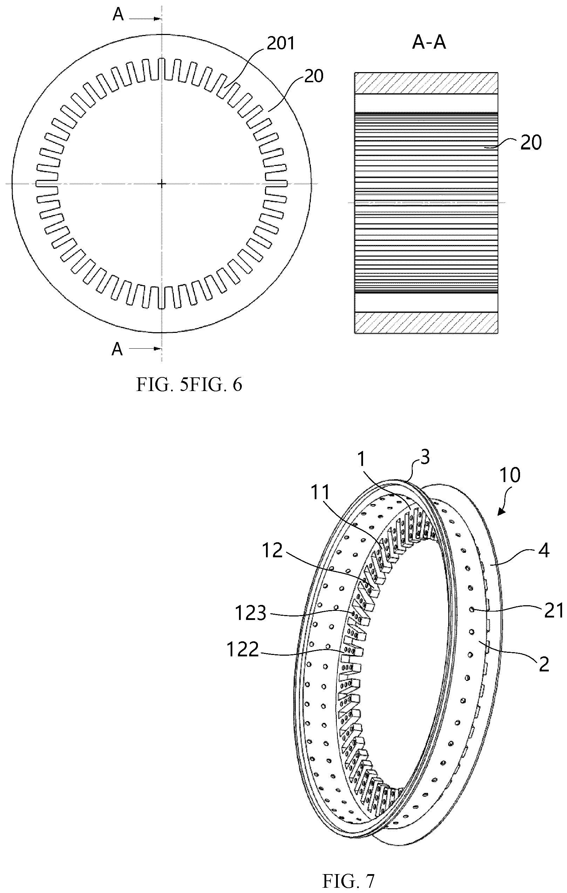

As shown in FIG. 5 and FIG. 6, the stator core 20 is annular and may be made of a magnetically conductive material such as electrotechnical pure iron. A plurality of second teeth 201 are provided arranged at intervals on the radial inner wall of the stator core 20 in the circumferential direction. The plurality of second teeth 201 may be evenly distributed in the axial direction, and the second teeth 201 may be rectangular or trapezoidal.

The winding 30 includes a winding main section 301 and an end winding section 302. The winding main section 301 is located within the stator core 20. The end winding section 302 protrudes from the end of the stator core 20 in the axial direction of the stator assembly 100. The winding 30 may have end winding sections 302 at only one end of the winding main section 301, or may have end winding sections 302 at both ends of the winding main section 301. The wires used to form the winding 30 may be U-shaped or I-shaped. The wires are inserted one by one into the grooves formed by two adjacent second teeth 201 of the stator core 20, and are bent and welded at the ends to form the end winding section 302.

The spray ring 10 is used to spray the cooling liquid onto the end winding section 302 for cooling. For example, the cooling liquid may be cooling oil or other liquid cooling media. Since the winding 30 will generate a large amount of heat during a continuous operation of the motor 200, by providing the spray ring 10, a liquid injection hole 614 may be provided on the housing 60 to introduce the cooling liquid from outside into an interior of the housing 60, and the cooling liquid is sprayed onto the end winding sections 302 through the spray ring 10 for cooling. The spray ring 10 may be provided on one side of the stator core 20 or on both sides.

The structure of the spray ring 10 will be described in detail below.

In some embodiments, as shown in FIG. 7, the spray ring 10 includes an annular disc 1 and an annular cylinder 2 coaxially arranged with the annular disc 1. The annular cylinder 2 has an end connected to a first end of the annular disc 1 in an axial direction of the spray ring 10, and a connection between the annular cylinder 2 and the annular disc 1 occurs at an outer end of the annular disc 1 in a radial direction of the spray ring 10. A region for accommodating a member to be cooled is formed between the annular cylinder 2 and the first end of the annular disc 1. A side wall of the annular disc 1 has a first hole 123 for spraying of cooling liquid towards the member to be cooled in a first direction. A side wall of the annular cylinder 2 has a second hole 21 for spraying of cooling liquid towards the member to be cooled in a second direction. The first direction is different from the second direction.

The annular disc 1 may be a circular ring structure. In a state where the spray ring 10 is mounted into the stator assembly 100, the annular disc 1 is embedded in a gap between an end winding section 302 and a stator core 20, facilitating cooling at a side of the end winding section 302 close to the stator core 20. A thickness of the annular disc 1 may be consistent with an axial dimension of the gap. An axial positioning of the spray ring 10 may be realized using the gap, and a mounting positioning of the spray ring 10 may be realized without providing a connection member.

The annular cylinder 2 may be a cylindrical thin-walled structure. The annular cylinder 2 has the end connected to the first end of the annular disc 1 in the axial direction of the spray ring 10, and the connection between the annular cylinder 2 and the annular disc 1 occurs at the outer end of the annular disc 1 in the radial direction of the spray ring 10. The annular cylinder 2 and the annular disc 1 may be fixedly connected to each other or integrally formed. A radial dimension of the annular cylinder 2 may remain unchanged in the axial direction, or may also gradually increase or decrease in an equal diameter structure. In FIG. 7, an annular disc 1 is provided at only one end of the annular cylinder 2 in the axial direction. Optionally, an annular disc 1 is provided at both ends of the annular cylinder 2 in the axial direction to obtain a better cooling effect.

The region for accommodating the member to be cooled is formed between the annular cylinder 2 and the first end of the annular disc 1. In the stator assembly 100, the member to be cooled is the end winding section 302. A gap is formed between an outer wall of the end winding section 302 and an inner wall of the annular cylinder 2. As a result, the cooling liquid may still maintain a certain speed when it is sprayed onto the member to be cooled through the second hole 21, and thus achieving a better cooling effect. A side wall of the annular disc 1 has one or more first holes 123 for spraying the cooling liquid towards the member to be cooled in a first direction. A side wall of the annular cylinder 2 has one or more second holes for spraying the cooling liquid towards the member to be cooled in a second direction. The first direction is different from the second direction. Optionally, the first hole 123 and the second hole 21 may be any shape such as a round hole, a polygonal hole, or the like.

The spray ring 10 of this embodiment includes the annular disc 1 and the annular cylinder 2. The cooling liquid can be sprayed from different directions towards the member to be cooled at the same time through the first hole 123 on the annular disc 1 and the second hole 21 on the annular cylinder 2, so that the member to be cooled has a larger area in contact with the cooling liquid. The member to be cooled can be cooled more quickly and evenly. More heat can be taken away, and a cooling effect can be improved. Moreover, the annular disc 1 is located at a radial inner side of the annular cylinder 2, which allows the annular disc 1 to be located on a side of the member to be cooled in the axial direction after mounting. The annular disc 1 has a first hole 123, which provides a structural basis for cooling from a side end of the member to be cooled in the axial direction.

In some embodiments, as shown in FIG. 7 to FIG. 9, an inner wall of the annular disc 1 has a plurality of grooves 11 arranged at intervals in a circumferential direction. The grooves 11 runs through in a thickness direction of the annular disc 1 to form a first tooth 12 between each two adjacent grooves 11. The first tooth 12 has a first cavity 121 for storing cooling liquid. The first cavity 121 has an opening located on an outer wall of the annular disc 1, and a first wall 122 of at least part of the first tooth 12 close to the annular cylinder 2 has the first hole 123.

The plurality of first teeth 12 at the radial inner end of the annular disc 1 may be evenly distributed in the circumferential direction. The first teeth 12 may be rectangular or trapezoidal. The bottom of the groove 11 may be located at an inner side of the inner wall of the annular cylinder 2 to ensure a structural strength of the annular disc 1, allowing the spray ring 10 to be structurally stable. The first cavity 121 in the first tooth 12 may be used to store the cooling liquid. The first tooth 12 may have a thin-walled structure. The shape of the first cavity 121 matches with the first tooth 12. The opening of the first cavity 121 is located at an outer wall of the annular disc 1, and the cooling liquid of the outer side of the annular cylinder 2 may flow into each of the first cavities 121 through the opening, allowing the cooling liquid in the first cavities 121 may be sprayed to a side of the member to be cooled in the axial direction through the first holes 123. Optionally, the first holes 123 may be disposed on the first wall 122 of part of the first teeth 12, or alternatively, the first holes 123 may be disposed on the first wall 122 of all the first teeth 12.

When the member to be cooled is the end winding section 302, the plurality of first teeth 12 may have a one-to-one correspondence with the plurality of second teeth 201 on the stator core in the circumferential direction. Therefore, one of the plurality of first teeth 12 and one of the plurality of second teeth 201 that are located at a same circumferential position are wound correspondingly. The spray ring 10 may be made of an insulating material to isolate the end winding section 302 and the stator core 20, to increase the insulation between the end winding section 302 and the stator core 20, and to prevent damage to the motor 200 due to insulation problems.

In this embodiment, with a plurality of first teeth 12 at a radial inner end of the annular disc 1 in the circumferential direction, the cooling liquid can be sprayed from different circumferential positions on one side of the member to be cooled in the axial direction, and a more uniform cooling of the member to be cooled can be achieved. Moreover, the first cavity 121 in each of the first teeth 12 is arranged, which is equivalent to forming a plurality of cooling flow channels, allowing the cooling liquid to be distributed to flow to different positions in the circumferential direction. No additional flow channels are required, and the structure is compact.

In some embodiments, the first direction is parallel to or at an acute angle to the axial direction of the spray ring 10. The second direction is parallel to or at an acute angle to the radial direction of the spray ring 10.

Optionally, the first direction is parallel to the axial direction. As a result, the center line of the first hole 123 may be arranged in the axial direction, and the cooling liquid can be sprayed towards the member to be cooled in the axial direction. Optionally, the first direction is at an acute angle to the axial direction. As a result, the center line of the first hole 123 is at an acute angle to the axial direction, and the cooling liquid can be sprayed towards the member to be cooled in any angle at an acute angle to the axial direction.

Optionally, the second direction is parallel to the radial direction. As a result, the center line of the second hole 21 may be arranged in the radial direction, and the cooling liquid can be sprayed towards the member to be cooled in the radial direction. Optionally, the second direction is at an acute angle to the radial direction. As a result, the center line of the second hole 21 is at an acute angle to the radial direction, and the cooling liquid can be sprayed towards the member to be cooled in any angle at an acute angle to the radial direction.

As shown in FIG. 7, a center line of the first hole 123 is provided in the axial direction, and a center line of the second hole 21 is provided in the radial direction.

This embodiment can select the suitable first direction and second direction according to actual needs so as to cool the member to be cooled from different directions at the same time. For example, the cooling may be carried out by spraying the cooling liquid from the axial direction and the radial direction at the same time, so that the member to be cooled has a larger area in contact with the cooling liquid. The member to be cooled is cooled more quickly and evenly, and the cooling effect can be improved.

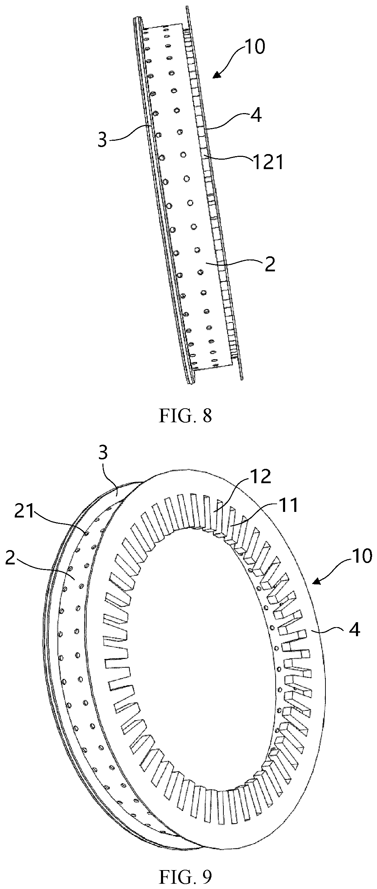

In some embodiments, as shown in FIG. 9, the spray ring 10 further includes a first mounting portion 3. A radial inner end of the first mounting portion 3 is connected to a second end of the annular cylinder 2 in an axial direction and extends in an entire circumferential direction. A radial outer end of the first mounting portion 3 is configured to be connected to a housing 60.

The first mounting portion 3 is folded outward in the radial direction relative to the second end of the annular cylinder 2 to be connected to the housing 60. The radial outer end of the first mounting portion 3 may abut against the inner wall of the housing 60 to achieve connection or may also be connected to the housing 60 by bonding or fastener connection. By providing the first mounting portion 3, a cavity for collecting the cooling liquid may be formed on the radial outer side of the annular cylinder 2. In order to collect the cooling liquid in the radial outer side area of the annular cylinder 2, the first mounting portion 3 closes between the inner wall of the housing 60 and the second end of the annular cylinder 2.

In this embodiment, with a first mounting portion 3 at the second end of the annular cylinder 2, not only the spray ring 10 can be easily mounted in the housing 60, but also a radial outer region of the annular cylinder 2 can form a cavity for collecting the cooling liquid. As a result, the cooling liquid can be sprayed out continuously and stably through the first hole 123 and the second hole 21, better cooling effect can be achieved, and the input amount of the cooling liquid can be saved.

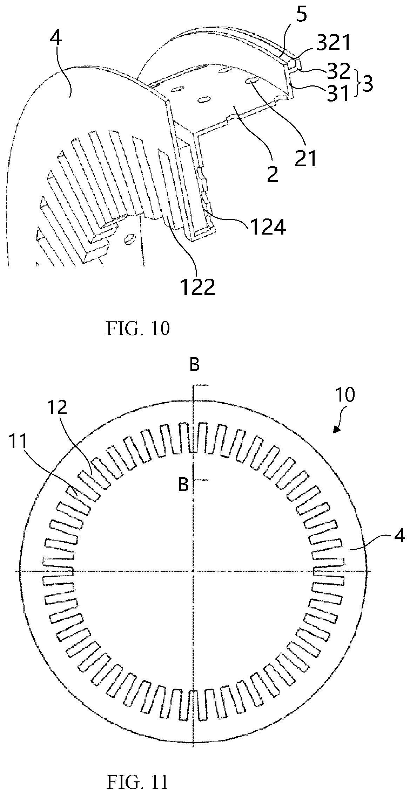

In some embodiments, as shown in FIG. 10, the radial outer end of the first mounting portion 3 is provided with a sealing member 5. The sealing member 5 is configured to form a sealing connection between the radial outer end of the first mounting portion 3 and the housing 60.

The sealing member 5 may be a rubber sealing member, and may be an annular sealing member provided around the radial outer end of the first mounting portion 3. The cross-section of the sealing member 5 may be circular or rectangular.

In this embodiment, with a seal member 5 between the radial outer end of the first mounting portion 3 and the housing 60, the radial outer region of the annular cylinder 2 can form a cavity for collecting the cooling liquid by a blocking of the first mounting portion 3 and the sealing effect of the sealing member 5. As a result, the cooling liquid can be sprayed out continuously and stably through the first hole 123 and the second hole 21, better cooling effect can be achieved, and the input amount of the cooling liquid can be further saved.

In some embodiments, as shown in FIG. 10, the first mounting portion 3 includes a plate-shaped portion 31 and a protrusion portion 32. A radial inner end of the plate-shaped portion 31 is connected to the second end of the annular cylinder 2 in the axial direction. A protrusion portion 32 is connected to a radial outer end of the plate-shaped portion 31 and protrudes in the axial direction towards at least one side relative to the plate-shaped portion 31. A radial outer side of the protrusion portion 32 has an accommodation groove 321 for placing the sealing member 5.

The plate-shaped portion 31 may be provided perpendicular to the annular cylinder 2, or at an acute or obtuse angle to the annular cylinder 2, and the plate-shaped portion 31 may extend in the entire circumferential direction. The protrusion portion 32 is provided at the radial outer end of the plate-shaped portion 31 and may, for example, protrude towards the outer side, the inner side, or both sides relative to the plate-shaped portion 31 in the axial direction.

The first mounting portion 3 of this embodiment can design the main portion as a thinner plate-shaped structure to reduce the weight of the spray ring 10, and provide a protrusion portion 32 with an increased cross-sectional area at the radial outer end of the plate-shaped portion 31 to allow the radial outer end of the first mounting portion 3 to have a sufficient area to mount the sealing member 5.

In some embodiments, as shown in FIG. 10, the spray ring 10 further includes a second mounting portion 4. A radial inner end of the second mounting portion 4 is connected to the radial outer end of the annular disc 1 and extends in the entire circumferential direction. The second mounting portion 4 is located at a side of the annular disc 1 facing away from the annular cylinder 2 in the axial direction. A radial outer end of the second mounting portion 4 is configured to be connected to the housing 60.

The second mounting portion 4 may be of a plate-shaped structure and may be connected by abutting against the inner wall of the housing 60, or may also be connected by bonding or fasteners. The second mounting portion 4 may be located at a side of the first cavity 121 away from the annular cylinder 2.

In this embodiment, with a second mounting portion 4, not only can the spray ring 10 be easily mounted in the housing 60, but also a radial outer region of the annular cylinder 2 can form a cavity for collecting the cooling liquid through a blocking of the second mounting portion 4. As a result, the cooling liquid can be sprayed out continuously and stably through the first hole 123 and the second hole 21, better cooling effect can be achieved, and the input amount of the cooling liquid can be saved.

In some embodiments, as shown in FIG. 10, the second mounting portion 4 is flush with and forms a flat plane with an outer end surface of the annular disc 1 facing away from the annular cylinder 2 in an axial direction. The second mounting portion 4 is flush with an outer end surface of the first teeth 12 facing away from the annular cylinder 2 in the axial direction.

In this embodiment, the arrangement of the second mounting portion 4 can avoid affecting the flow of the cooling liquid into the first cavity 121 without increasing an axial dimension of the spray ring 10. Moreover, the second mounting portion 4 is flush with the outer end surface of the annular disc 1, which makes it easy to allow a plane formed by the second mounting portion 4 and the outer end surface of the annular disc 1 abuts against other members to achieve axial limitation and allows the mounting of the spray ring 10 more stable.

For example, in the stator assembly 100, the plane as a whole fits with the end surface of the stator core 20, which not only improves the mounting stability of the spray ring 10, but also reduces the axial dimension of the stator assembly 100. Specifically, as shown in FIG. 2 and FIG. 10, the second wall 124 of the first teeth 12 away from the annular cylinder 2 fits with the end surface of the stator core 20.

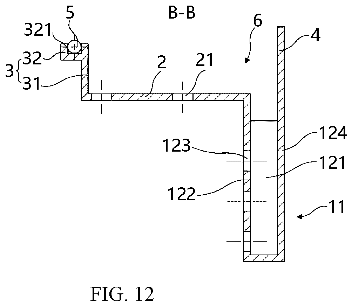

In some embodiments, as shown in FIG. 11 and FIG. 12, the spray ring 10 further includes a first mounting portion 3 and a second mounting portion 4. A radial inner end of the first mounting portion 3 is connected to a second end of the annular cylinder 2 in an axial direction and extends in an entire circumferential direction. A radial inner end of the second mounting portion 4 is connected to a radial outer end of the annular disc 1 and extends in the entire circumferential direction. The second mounting portion 4 is located on a side of the annular disc 1 facing away from the annular cylinder 2 in the axial direction. Radial outer ends of the first mounting portion 3 and the second mounting portion 4 is configured to be connected to the housing 60. The first mounting portion 3, the annular cylinder 2, and the second mounting portion 4 define a second cavity 6 in communication with all of the first cavities 121.

The second cavity 6 forms a cavity for collecting the cooling liquid. The second cavity 6 is an annular cavity and may be in communication with all the first cavities 121 distributed in the circumferential direction. When the spray ring 10 is mounted in the housing 60, the second cavity 6 is defined by the first mounting portion 3, the annular cylinder 2, the second mounting portion 4, and the inner wall of the housing 60. A liquid injection hole 614 is provided at a position corresponding to the first cavity 121 on the side wall of the housing 60. The cooling liquid introduced through the liquid injection hole 614 enters the second cavity 6 to spray the cooling liquid towards the member to be cooled in a second direction through the second hole 21. At the same time, the cooling liquid in the second cavity 6 flows into each of the first cavities 121 in the circumferential direction to spray the cooling liquid towards the member to be cooled in a first direction through the first holes 123.

This embodiment forms a second cavity 6 by arranging the first mounting portion 3 and the second mounting portion 4. In this way, the cooling liquid can be collected in the radial outer region of the annular cylinder 2 and be supplied to each of the first cavities 121 by flowing in the circumferential direction. As a result, the cooling liquid can be sprayed out through the first hole 123 and the second hole 21 evenly and stably, and the cooling effect of the member to be cooled can be improved.

In some embodiments, in the radial direction, the radial outer end of the second mounting portion 4 is higher than the radial outer end of the first mounting portion 3.

When both of the first mounting portion 3 and the second mounting portion 4 are annular, an outer diameter of the second mounting portion 4 is larger than an outer diameter of the first mounting portion 3.

In this embodiment, the radial outer end of the second mounting portion 4 is higher than the radial outer end of the first mounting portion 3. When mounted in the housing 60, an axial limitation of the spray ring 10 in the housing 60 can be achieved by a higher portion of the second mounting portion 4 abutting against a step structure of the inner wall of the housing 60.

In some embodiments, as shown in FIG. 7, a first wall 122 of the first tooth 12 has a plurality of first holes 123 arranged at intervals in the radial direction.

For example, the plurality of first holes 123 may be arranged at intervals evenly in the radial direction. Optionally, the first hole 123 may be provided on each of the first teeth 12, and a plurality of first holes 123 may be provided on each of the first teeth 12 arranged at intervals in the radial direction. Optionally, the first holes 123 may be provided only on part of the first teeth 12, or the first holes 123 may be arranged differently on different first teeth 12.

In this embodiment, with a plurality of first holes 123 arranged at intervals on the first wall 122 of the first teeth 12 in the radial direction, a spraying range of the cooling liquid in the radial direction can be increased on the basis of the cooling liquid being sprayed out through the plurality of first teeth 12 in the circumferential direction. As a result, a contact area between the cooling liquid and the member to be cooled can be increased and uniformity of the cooling liquid sprayed onto the member to be cooled can be improved. This can take away more heat and optimize the cooling effect.

In some embodiments, as shown in FIG. 7, a side wall of the annular cylinder 2 has a plurality of second holes 21. The plurality of second holes 21 is arranged in at least one row in the axial direction, and each row of the at least row includes multiple ones of the plurality of second holes 21 arranged at intervals in the circumferential direction of the spray ring 10.

For example, when providing a plurality of rows of second holes 21, two adjacent rows of second holes 21 may be opposite or staggered in the circumferential direction.

In this embodiment, each row of second holes 21 includes a plurality of second holes 21 arranged at intervals in the circumferential direction, which can spray the cooling liquid to the member to be cooled from different angles in the circumferential direction; or when multiple rows of second holes 21 are provided in the axial direction, a spraying range of the cooling liquid in the axial direction can be increased to increase a contact area between the cooling liquid and the member to be cooled and to improve the uniformity of the cooling liquid sprayed onto the member to be cooled, which can take away more heat and optimize the cooling effect.

After describing the structure of the spray ring 10 through the above embodiments, the following description will be made by taking the use of the spray ring 10 in the stator assembly 100 and the motor 200 as an example.

In some embodiments, an inner wall of the annular disc 1 has a plurality of grooves 11 arranged at intervals in a circumferential direction. The plurality of grooves 11 runs through in a thickness direction of the annular disc 1 to form a first tooth 12 between each two adjacent grooves 11. The stator core 20 is annular. A plurality of second teeth 201 is arranged at a radial inner wall of the stator core 20 and is arranged at intervals in a circumferential direction. The plurality of second teeth 201 has a one-to-one correspondence with a plurality of first teeth 12 in the circumferential direction. One of the plurality of first teeth 12 and one of the plurality of second teeth 201 that are located at a same circumferential position are wound correspondingly.

The plurality of second teeth 201 have a one-to-one correspondence with a plurality of first teeth 12 in the circumferential direction, that is, each pair of the first tooth 12 and the second tooth 201 are located at a same circumferential position. Optionally, the shape and dimension of the first teeth 12 and the second teeth 201 may be the same to facilitate winding while maximizing the volume of the first cavity 121 to accommodate more cooling liquid, allowing the cooling liquid to be sprayed continuously and stably through the first hole 123.

In this embodiment, with a plurality of first teeth 12 arranged at intervals on the annular disc 1 in the circumferential direction, and the plurality of first teeth 12 having a one-to-one correspondence with the plurality of second teeth 201, not only can the demand for spraying the cooling liquid at different circumferential positions in the first direction be satisfied, but also the winding of the stator core 20 is more convenient. As a result, the function of spraying the cooling liquid in the first direction does not affect the original winding formation method in the stator assembly 100.

In some embodiments, as shown in FIG. 2, a first end of the annular disc 1 in the axial direction abuts against the end winding section 302, and a second end of the annular disc 1 in the axial direction abuts against an end surface of the stator core 20.

In the structure in which the annular disc 1 includes a plurality of first teeth 12, the first walls 122 of all first teeth 12 abut against the end winding section 302, and the second walls 124 of all first teeth 12 abut against the end surface of the stator core 20. Since the first hole 123 is provided on the first wall 122, the cooling liquid may be sprayed from the first hole 123 to directly cool the end winding section 302. Therefore, the first teeth 12 not only collect the cooling liquid to be sprayed through the first hole 123 to cool the end winding section 302, but also play a positioning role in the mounting of the spray ring 10.

The structure of this embodiment enables the two ends of the annular disc 1 in the axial direction to abut against the end surfaces of the end winding section 302 and the stator core 20 respectively. The annular disc 1 can be axially limited through the gap space between the end winding section 302 and the stator core 20, which can simplify the fixed mounting structure of the spray ring 10.

In some embodiments, a motor 200 includes a housing 60, a rotor 40, and the stator assembly 100. The rotor 40 is rotatably mounted to the housing 60, and the stator assembly 100 is provided in the housing 60 and coaxially provided around the rotor 40.

In the motor 200 of this embodiment, the cooling liquid can be sprayed on the end winding section 302 in the stator assembly 100 through the spray ring 10 in different first and second directions to improve the cooling effect of the end winding section 302. During the long-term operation of the motor 200, more heat can be taken away. Therefore, the motor 200 can be kept working in a suitable temperature range, and the working performance, reliability, and life of the motor 200 can be improved.

In some embodiments, as shown in FIG. 2, the spray ring 10 further includes a first mounting portion 3 and a second mounting portion 4. The first mounting portion 3 has a radial inner end connected to a second end of the annular cylinder 2 in an axial direction and extends in an entire circumferential direction. The second mounting portion 4 has a radial inner end connected to a radial outer end of the annular disc 1 and extends in the entire circumferential direction. The second mounting portion 4 is located on a side of the annular disc 1 facing away from the annular cylinder 2 in the axial direction. The housing 60 includes an accommodation shell 61 and an end cover 62. The accommodation shell 61 sequentially has a third hole 611 and a fourth hole 612 in the axial direction, and one end of the third hole 611 facing away from the fourth hole 612 forms an opening of the accommodation shell 61. A diameter of the third hole 611 is greater than that of the fourth hole 612 to form a step 613 at a connection. The end cover 62 is configured to close the opening. The end winding section 302 is formed at both ends of the stator core 20 in the axial direction. The spray ring 10 provided between the end winding section 302 away from the end cover 62 and the stator core 20 is the first spray ring 10A, and the spray ring 10 provided between the end winding section 302 close to the end cover 62 and the stator core 20 is a second spray ring 10B. The first mounting portion 3 of the first spray ring 10 fits with and is connected to the inner wall of the fourth hole 612. The second mounting portion 4 of the first spray ring 10 abuts against the step 613. The first mounting portion 3 of the second spray ring 10 fits with and is connected to the inner wall of the third hole 611 and abuts against an end surface of the end cover 62. The second mounting portion 4 of the second spray ring 10 abuts against the inner wall of the third hole 611.

Optionally, the housing 60 may be in the form of a cylindrical cartridge structure including an accommodation shell 61 and an end cover 62. The accommodation shell 61 and the end cover 62 are respectively provided with holes for mounting the bearings 50 at opposite positions in the axial direction.

Optionally, the end winding sections 302 are formed at both ends of the stator core 20 in the axial direction, and the first spray ring 10A and the second spray ring 10B are respectively used to spray the cooling liquid on the two end winding sections 302 for cooling. The structures of the first spray ring 10A and the second spray ring 10B may be exactly the same or may have differences. Optionally, the spray ring 10 may also be provided on only one of the end winding sections 302.

Optionally, the first mounting portion 3 of the first spray ring 10 is cooperatively connected with the inner wall of the fourth hole 612. For example, the first mounting portion 3 may directly abut against the inner wall of the fourth hole 612, or the first mounting portion 3 may abut against the inner wall of the fourth hole 612 through the sealing member 5. The second mounting portion 4 of the first spray ring 10A abuts against the step 613 to axially limit the first spray ring 10A. The outer diameter of the second mounting portion 4 of the first spray ring 10 may be consistent with the diameter of the third hole 611, or may be smaller than the diameter of the third hole 611. The first mounting portion 3 of the second spray ring 10B is cooperatively connected with the inner wall of the third hole 611 and abuts against the end surface of the end cover 62. For example, the first mounting portion 3 may directly abut against the inner wall of the third hole 611, or the first mounting portion 3 may abut against the inner wall of the third hole 611 through the sealing member 5. The first mounting portion 3 abuts against the end surface of the end cover 62 to axially limit the second spray ring 10B. The second mounting portion 4 of the spray ring 10 may abut against the inner wall of the third hole 611, for example, it may directly abut against the inner wall of the third hole 611.

In this embodiment, end winding sections 302 are respectively provided on both sides of the stator core 20. By providing the first spray ring 10A and the second spray ring 10B, the two end winding sections 302 can be cooled respectively to optimize the cooling effect of the motor 200. Moreover, by providing steps 613 on the inner wall of the accommodation shell 61 and designing the housing 60 into a split structure, it is possible to not only achieve the smooth mounting of the two spray rings 10, but also axially limit the two spray rings 10.

In some embodiments, the spray ring 10 further includes a first mounting portion 3. A radial inner end of the first mounting portion 3 is connected to the second end of the annular cylinder 2 in the axial direction and extends in the entire circumferential direction, and the first mounting portion 3 is sealingly connected to the housing 60.

A radial outer end of the first mounting portion 3 may be provided with an accommodation groove 321, and a sealing member 5 is provided in the accommodation groove 321 to achieve a sealing connection between the first mounting portion 3 and the housing 60.

In this embodiment, by allowing the first mounting portion 3 to be sealingly connected to the housing 60, the first mounting portion 3, the second mounting portion, the annular cylinder 2, and the housing 60 can define a second cavity 6, which facilitates the collection of the cooling liquid and prevents the cooling liquid from flowing out through the gap between the first mounting portion 3 and the housing 60.

A specific embodiment of the motor 200 of the present disclosure is given below in conjunction with FIG. 2 to FIG. 12.

As shown in FIG. 2 and FIG. 3, the end winding sections 302 are formed at both ends of the stator core 20 in the axial direction. The first spray ring 10A and the second spray ring 10B are respectively used to spray the cooling liquid for cooling the two end winding sections 302, which are respectively located at both sides of a second axial section 42 of the rotor 40. Gaps are formed between the respective annular cylinder 2 of the first spray ring 10A and the second spray ring 10B and the end winding 302, and a gap is formed between the end surface of the stator core 20 and the end surface of the end winding section 302. The annular disc 1 of the spray ring 10 is embedded in the gap to achieve the axial positioning of the spray ring 10.

As shown in FIG. 4, the dimension of the spray ring 10 in the axial direction may substantially cover the end winding section 302. The annular cylinder 2 may have a plurality row of second holes 21. Each row of the plurality rows of second holes 21 may include a plurality of second holes 21 arranged at intervals in the circumferential direction. The radial outer end of the second mounting portion 4 may be flush with the stator core 20.

As shown in FIG. 7, a plurality of first teeth 12 are provided arranged at intervals on a radial inner end of the annular disc 1 in the circumferential direction. The first teeth 12 has a first cavity 121 inside, and the first wall 122 of the first teeth 12 close to the annular cylinder 2 may have a first hole 123. The first wall 122 may have a plurality of first holes 123 arranged at intervals in the radial direction. Each of the first cavities 121 is in communication with the second cavity 6. The second cavity 6 is defined by the first mounting portion 3, the second mounting portion 4, the annular cylinder 2, and the inner wall of the housing 60. The first spray ring 10A and the second spray ring 10B have separate liquid injection holes 614 on the housing 60.

While the present disclosure has been described with reference to preferred embodiments, various modifications may be made, and equivalents may be substituted for components thereof without departing from the scope of the present disclosure. In particular, as long as there is no structural conflict, the technical features mentioned in the various embodiments may be combined in any way. The present disclosure is not limited to the specific embodiments disclosed herein, but includes all technical solutions falling within the scope of the claims.

## Claims

1. A spray ring (10), comprising:
an annular disc (1); and
an annular cylinder (2) coaxially arranged with the annular disc (1), the annular cylinder (2) having an end connected to a first end of the annular disc (1) in an axial direction of the spray ring (10), and a connection between the annular cylinder (2) and the annular disc (1) occurring at an outer end of the annular disc (1) in a radial direction of the spray ring (10);
wherein a region for accommodating a member to be cooled is formed between the annular cylinder (2) and the first end of the annular disc (1); wherein the annular disc (1) has a first hole (123) for spraying of cooling liquid towards the member to be cooled in a first direction; and wherein a side wall of the annular cylinder (2) has a second hole (21) for spraying of cooling liquid towards the member to be cooled in a second direction, the first direction being different from the second direction.

2. The spray ring (10) according to claim 1, wherein an inner wall of the annular disc (1) has a plurality of grooves (11) arranged at intervals in a circumferential direction, the grooves (11) running through in a thickness direction of the annular disc (1) to form a first tooth (12) between each two adjacent grooves (11); and wherein the first tooth (12) has a first cavity (121) for storing cooling liquid, the first cavity (121) having an opening located on an outer wall of the annular disc (1), and a first wall (122) of at least part of the first tooth (12) close to the annular cylinder (2) having the first hole (123).

3. The spray ring (10) according to claim 1 or 2, wherein the first direction is parallel to or at an acute angle to the axial direction of the spray ring (10); and wherein the second direction is parallel to or at an acute angle to the radial direction of the spray ring (10).

4. The spray ring (10) according to any one of claims 1 to 3, further comprising a first mounting portion (3), a radial inner end of the first mounting portion (3) being connected to a second end of the annular cylinder (2) in an axial direction and extending in an entire circumferential direction, and a radial outer end of the first mounting portion (3) being configured to be connected to a housing (60).

5. The spray ring (10) according to claim 4, wherein the radial outer end of the first mounting portion (3) is provided with a sealing member (5), the sealing member (5) being configured to form a sealing connection between the radial outer end of the first mounting portion (3) and the housing (60).

6. The spray ring (10) according to claim 5, wherein the first mounting portion (3) comprises:
a plate-shaped portion (31), a radial inner end of the plate-shaped portion (31) being connected to the second end of the annular cylinder (2) in the axial direction; and
a protrusion portion (32) connected to a radial outer end of the plate-shaped portion (31) and protruding in the axial direction towards at least one side relative to the plate-shaped portion (31), and a radial outer side of the protrusion portion (32) having an accommodation groove (321) for placing the sealing member (5).

7. The spray ring (10) according to any one of claims 1 to 6, further comprising a second mounting portion (4), a radial inner end of the second mounting portion (4) being connected to the radial outer end of the annular disc (1) and extending in the entire circumferential direction, the second mounting portion (4) being located at a side of the annular disc (1) facing away from the annular cylinder (2) in the axial direction, and a radial outer end of the second mounting member (4) being configured to be connected to the housing (60).

8. The spray ring (10) according to claim 7, wherein the second mounting portion (4) is flush with and forms a flat plane with an outer end surface of the annular disc (1) facing away from the annular cylinder (2) in an axial direction.

9. The spray ring (10) according to claim 2, further comprising a first mounting portion (3) and a second mounting portion (4), a radial inner end of the first mounting portion (3) being connected to a second end of the annular cylinder (2) in an axial direction and extending in an entire circumferential direction; a radial inner end of the second mounting portion (4) being connected to a radial outer end of the annular disc (1) and extending in the entire circumferential direction, the second mounting portion (4) being located on a side of the annular disc (1) facing away from the annular cylinder (2) in the axial direction, and radial outer ends of the first mounting portion (3) and the second mounting portion (4) being configured to be connected to the housing (60); and
wherein the first mounting portion (3), the annular cylinder (2), and the second mounting portion (4) define a second cavity (6) in communication with all of the first cavities (121).

10. The spray ring (10) according to claim 9, wherein in the radial direction, the radial outer end of the second mounting portion (4) is higher than the radial outer end of the first mounting portion (3).

11. The spray ring (10) according to claim 2, 9 or 10, wherein a first wall (122) of the first tooth (12) has a plurality of first holes (123) arranged at intervals in the radial direction.

12. The spray ring (10) according to any one of claims 1 to 11, wherein a side wall of the annular cylinder (2) has a plurality of second holes (21), the plurality of second holes (21) being arranged in at least one row in the axial direction, and each row of the at least row comprising multiple ones of the plurality of second holes (21) arranged at intervals in the circumferential direction of the spray ring (10).

13. A stator assembly (100) comprising:
a stator core (20);
the spray ring (10) according to any one of claims 1 to 12; and
a winding (30) arranged at the stator core (20) and comprising an end winding section (302) located at an end of the stator core (20) in the axial direction, wherein a gap is formed between the end winding section (302) and the stator core (20), and the end winding section (302) being the member to be cooled,
wherein the annular disc (1) is located in a gap between the stator core (20) and the end winding section (302) in the axial direction, and wherein a side wall of the annular disc (1) having the first hole (123) is located on a side facing away from the stator core (20).

14. The stator assembly (100) according to claim 13, wherein an inner wall of the annular disc (1) has a plurality of grooves (11) arranged at intervals in a circumferential direction, the plurality of grooves (11) running through in a thickness direction of the annular disc (1) to form a first tooth (12) between each two adjacent grooves (11); and
wherein the stator core (20) is annular, and wherein a plurality of second teeth (201) is arranged at a radial inner wall of the stator core (20) and is arranged at intervals in a circumferential direction, the plurality of second teeth (201) having a one-to-one correspondence with a plurality of first teeth (12) in the circumferential direction, and one of the plurality of first teeth (12) and one of the plurality of second teeth (201) that are located at a same circumferential position being wound correspondingly.

15. The stator assembly (100) according to claim 13 or 14, wherein a first end of the annular disc (1) in the axial direction abuts against the end winding section (302), and wherein a second end of the annular disc (1) in the axial direction abuts against an end surface of the stator core (20).

16. A motor (200), comprising:
a housing (60);
a rotor (40) rotatably mounted to the housing (60); and
the stator assembly (100) according to any one of claims 13 to 15, the stator assembly (100) being provided in the housing (60) and coaxially provided around the rotor (40).

17. The motor (200) according to claim 16, wherein:
the spray ring (10) further comprises a first mounting portion (3) and a second mounting portion (4), the first mounting portion (3) having a radial inner end connected to a second end of the annular cylinder (2) in an axial direction and extending in an entire circumferential direction, the second mounting portion (4) having a radial inner end connected to a radial outer end of the annular disc (1) and extending in the entire circumferential direction, and the second mounting portion (4) being located on a side of the annular disc (1) facing away from the annular cylinder (2) in the axial direction;
the housing (60) comprises an accommodation shell (61) and an end cover (62), the accommodation shell (61) sequentially having a third hole (611) and a fourth hole (612) in the axial direction, one end of the third hole (611) facing away from the fourth hole (612) forms an opening of the accommodation shell (61), a diameter of the third hole (611) being greater than that of the fourth hole (612) to form a step (613) at a connection, the end cover (62) being configured to close the opening; and
the end winding section (302) is formed at both ends of the stator core (20) in the axial direction, the spray ring (10) provided between the end winding section (302) away from the end cover (62) and the stator core (20) is the first spray ring (10A), the spray ring (10) provided between the end winding section (302) close to the end cover (62) and the stator core (20) is a second spray ring (10B); and
the first mounting portion (3) of the first spray ring (10) fits with and is connected to the inner wall of the fourth hole (612); the second mounting portion (4) of the first spray ring (10) abuts against the step (613); the first mounting portion (3) of the second spray ring (10) fits with and is connected to the inner wall of the third hole (611) and abuts against an end surface of the end cover (62); and the second mounting portion (4) of the second spray ring (10) abuts against the inner wall of the third hole (611).

18. The motor (200) according to claim 16 or 17, wherein the spray ring (10) further comprises a first mounting portion (3), a radial inner end of the first mounting portion (3) being connected to the second end of the annular cylinder (2) in the axial direction and extending in the entire circumferential direction, and the first mounting portion (3) being sealingly connected to the housing (60).

19. An electric vehicle (300), comprising the motor (200) according to any one of claims 16 to 18.
